# EUROPEAN PATENT SPECIFICATION

(11) **EP 1 859 962 B1**
(45) Date of publication and mention of the grant of the patent: **08.07.2009**
(21) Application number: 07108692.0
(22) Date of filing: 22.05.2007
(51) Int. Cl.: B60C 11/12

(54) **Pneumatic tire with tread siping**
Luftreifen mit Profilzuschneidung
Pneumatique avec entaillage du roulement

(30) Priority: 25.05.2006 US 440557
(43) Date of publication of application: 28.11.2007
(73) Proprietor: The Goodyear Tire & Rubber Company, Akron, OH 44316-0001 (US)
(72) Inventor: Bovaird, Lorie Jean, Hudson, OH 44236 (US); Edwards, Steven Amos, Akron, OH 44313 (US); Boarman, Noel Lee, Akron, OH 44312 (US)
(74) Representative: Kutsch, Bernd

(56) References cited:
- EP-A2- 0 952 011
- EP-A2- 1 277 599
- WO-A-20/05123420
- JP-A- 9 183 303
- JP-A- 11 151 914

## Description

### Field of the Invention

The present invention is related to a pneumatic tire. More specifically, the present invention is related to a tire having a tread wherein the tread is provided with a particular type of multi-dimensional siping wherein the length of the sipe is greater within the tread element than at the surface of the tire tread when the tire tread is substantially unworn.

### Background of the Invention

The tread portion of a pneumatic tire generally comprises a plurality of circumferentially and laterally extending grooves defining ground engaging rubber elements, the elements being in the form of blocks or ribs or combinations thereof. The particular size and shape of the tread elements contribute significantly to the overall performance of the tire and are for that reason designed to achieve the desired tire characteristics.

Conventionally, tire treads are also provided with a feature known as a sipe. A sipe is a groove having a width in the range of 0.1 % to 1 % of the tread width, i.e. the arc length of the tread surface in the axial direction. The sipe tends to close when it is located in the tire footprint at zero speed and under normal load and pressure. Sipes are typically formed by steel blades inserted into a cast or machined mold or tread ring therefor.

A sipe may extend circumferentially or laterally about the tread in a straight, curved, or zigzag manner and may be as deep as the primary tread grooves or have a depth that is greater than the groove depth. The sipes can pass through the sides of the ribs and tread blocks or be confined to the interior of the tread elements. It is also known to have sipes lying in planes which are not perpendicular to tangents to the surface of the tread at their point of intersection; the inclination of the planes defining neighboring sipes can be identical or differ step wise along the tread element length. It is further known to use sipes having a depth that varies along its length.

The presence of sipes in a tread increases the number of biting edges in the tread. The local high pressure at each biting edge improves the wiping and digging action of the tread surface, conferring to a tire excellent traction on snow and ice. Furthermore, sipes improve the flexibility of the tread elements without destroying their solidity. The easy relative longitudinal sliding between the opposed faces of the sipe weakens the resistance of the tread elements to flexing in the contact area between tread and road and therefor slows down the heat buildup of the tire; however, the sliding of the opposed faces of the sipes creates friction between the opposing sipe faces and can lead to wear of the sipes.

EP-A- 0 952 011 describes a tire and a sipe blade according to the preamble of claims 1 and 13 respectively. ,

### Summary of the Invention

The present invention is directed to a tire comprising a multi-dimensional sipe according to claim 1 and to a blade usable to manufacture such a sipe according to claim 13. The sipe is provided for increased biting edges and flexibility in the tire tread as the tire wears.

Dependent claims refer to preferred embodiments of the invention.

Preferably, these three portions of the sipe or blade are radially adjacent to each other in the order recited in claim 1 or 13 respectively and/or are the only defined portions of differing configurations along the full depth of the sipe.

The first sipe portion preferably has a configuration that is straight, curved, or mimics a configuration of a groove that forms the tread element in which the sipe is formed. The third sipe portion preferably has a zig-zag, crenellated, scalloped, or undulating configuration.

In one aspect of the invention, the first sipe portion has a depth D1 of at least 5%, but not more than 20%, such as between 10% to 15%, of the sipe depth Ds.

In another aspect of the invention, the second sipe portion has a depth D2 of at least 5%, but not more than 25%, such as between 10% to 20%, of the sipe depth Ds.

In another aspect of the invention, the third sipe portion has a depth D3 of at least 50%, preferably at least 60%, but not more than 85%, of the sipe depth Ds.

In another aspect of the invention, the third sipe portion has an effective sipe length Le of at least 110% greater than the effective sipe length Le of the first sipe portion. In a preferred embodiment, the effective length of the third sipe portion is 115% to 140% greater than the effective length Le of the first sipe portion.

In another aspect of the invention, the effective length Le of the second sipe portion gradually increases from the effective length Le of the first sipe portion to the effective length Le of the third sipe portion.

The blade of claim 13 preferably has only a single transitional pattern portion in the pattern portion of the blade.

In one aspect of the invention, the first pattern portion of the blade has a depth D1 of at least 5% of the pattern depth Dp. The second pattern portion preferably has a depth D2 of at least 5% of the pattern depth Dp. The third pattern portion preferably has a depth D3 of at least 60% of the pattern depth Dp.

In another aspect of the invention, the first pattern portion has either a straight or curved configuration. The third pattern portion has a zig-zag, crenellated, scalloped, or undulating configuration. Generally speaking, the design of the blade is such that it is able to create a sipe in the tread as described herein.

### Definitions

The following definitions are controlling for the disclosed invention.

"Axial" and "axially" are used herein to refer to lines or directions that are parallel to the axis of rotation of a tire.

"Blade" means a protrusion in a tire curing mold that forms part of the tread design. The protrusion forms a corresponding depression in the finished tire tread.

"Radial" and "radially" are used to mean directions radially toward or away from the axis of rotation of the tire.

"Sipes" refer to grooves molded into tread elements of a tire that subdivide the tread elements and improve traction characteristics. Sipes have a width in the range of 0.1 % to 1 % of the tread width and usually tend to close in a tire footprint. The depth of a sipe may vary around the circumference of the tread, or the depth of one sipe may be constant but vary from the depth of another sipe in the tire.

### Brief Description of the Drawings

The invention will be described by way of example and with reference to the accompanying drawings in which:
FIG. 1 illustrates a tire tread;
FIG. 2 illustrates a cut sectional view of a sipe in the tread of FIG. 1;
FIG. 3 is a blade used to form the sipe similar to the sipe of FIG. 2;
FIGS. 4A and 4B are top and bottom views of the blade of FIG. 3; and
FIG. 5 is another tread illustration.

### Detailed Description of the Invention

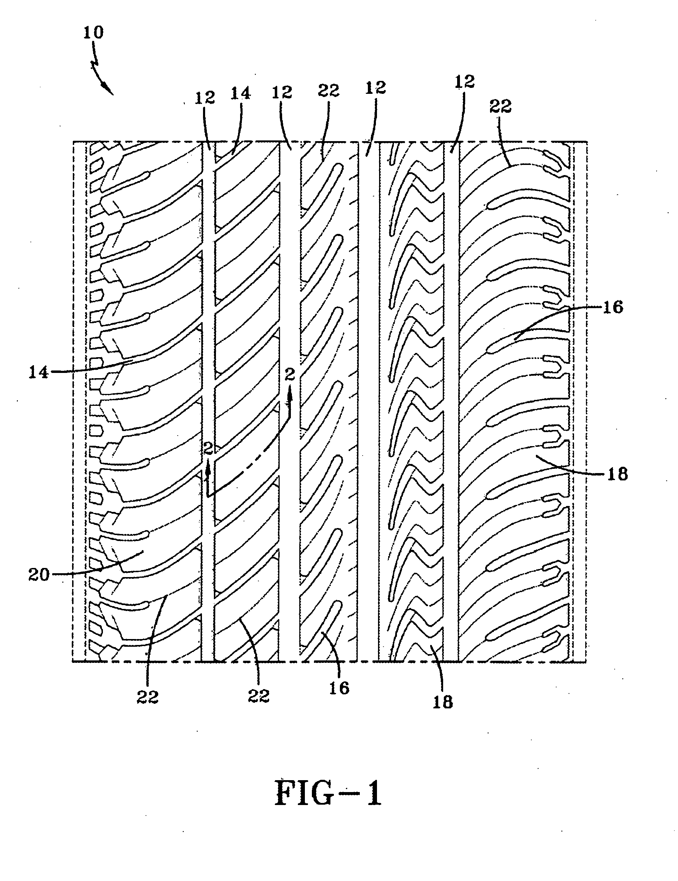

FIG. 1 is an exemplary tread 10 for a pneumatic tire. The tire employing the illustrated tread may be of a radial or bias construction; the more typical being a radial construction. The tire tread 10 has a plurality of circumferential grooves 12 and a plurality of lateral grooves 14, 16. These grooves 12, 14, 16, in different combinations from a plurality of tread elements 18, 20. Some of the lateral grooves 14 extend between the circumferential grooves 12 and some terminate within the tread element 20, creating a blind groove 16. For the illustrated tread, within each tread element 18, 20, the tread element being either a block, such as tread elements 20, or a rib, such as tread elements 18, is at least one sipe. The illustrated sipes 22 have an initial external configuration that at least partially mimics the configuration of the lateral grooves that form the instant tread element; as used herein mimicking is defined as either being identical or closely imitating such the sipe has the same general configuration as the groove configuration it is mimicking. Those skilled in the art will appreciate that the tread configuration may differ from that illustrated, and may have any tread element configuration desired by the tire engineer; the specific tread element configuration and the selection of sipes in the various tread elements is selected to meet the intended tire performance characteristics.

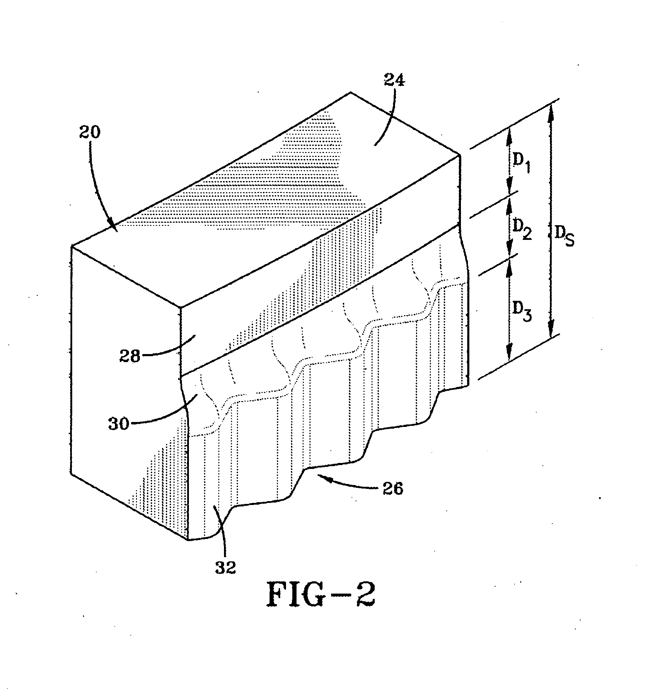

Every sipe 22 has a depth Ds as measured from the initial tread surface 24 to the radially innermost point of the sipe, see FIG. 2. This sipe depth Ds may also be defined as relative to either the block height or the adjacent groove depth; both the block height and the groove depth are measured when the tire is new and the tread substantially unworn. The sipe depth Ds may be less than, equal to, or greater than the adjacent groove depth, and may even vary along the length of the sipe. Each sipe 22 has an effective length Le. The effective length Le is calculated as the cross sectional area of the sipe 22, as measured in a plane perpendicular to the sipe depth Ds, divided by the width of the sipe; i.e. Le = area / width. The width of the sipe is measured when the sipe is not in the tire footprint.

In accordance with the present invention, at least one of the sipes in the tire tread has a configuration wherein the effective length of the sipe is increased from the effective length at the initial tread surface to the effective length of the sipe at points along the depth of the sipe. A cut-away of a tread element along the depth of the sipe is illustrated in FIG. 2. As measured from the new, or substantially unworn, tread surface, the inventive sipe 26 has a constant configuration for a depth D1 of at least 5% but not greater than 20% of the radially outermost portion of the sipe depth Ds, creating a first , radially outermost sipe portion 28. Due to the constant configuration of the first sipe portion 28, the effective sipe length Le for the first portion 28 is constant for the full depth D1 of the first sipe portion 28. The exact configuration for the first sipe portion 28 is preferably straight or has a slight curvature thereto. The constant configuration is preferably, but not necessarily, a configuration that mimics the configuration of an adjacent parallel groove.

Radially inward of the first sipe portion 28 is a second sipe portion 30 best referred to as the transition zone. The second sipe portion 30 has a depth D2 of at least 5% but not greater than 25% of the sipe depth Ds. In the second sipe portion 30, the sipe configuration transforms from one constant configuration, that of the first sipe portion 28, to a second constant configuration, that of the third sipe portion 32, wherein along the entire depth D2 of the second sipe portion 30, the effective length Le of the sipe 26 is gradually increasing.

Radially inward of the second sipe portion 30 is the third, and radially innermost sipe portion 32. The third sipe portion 32 has a depth D3 of at least 60% of the sipe depth Ds, preferably, at least 75% of the sipe depth Ds, but not more than 85% of the sipe depth Ds. In the third sipe portion 32, the sipe configuration is constant, with the effective length Le of the sipe portion 32 being constant, and the effective length Le being greater than the effective sipe length Le of the first sipe portion 28. The effective length Le of the third sipe portion 32 is at least 110% greater than the effective length Le of the first sipe portion 28, and more preferably 120% greater than the effective length Le of the first sipe portion 28. The third sipe portion 32 has a zig-zag, crenellated, scalloped, or undulating configuration; FIG. 2 illustrates a zig-zag configuration for the third sipe portion 32.

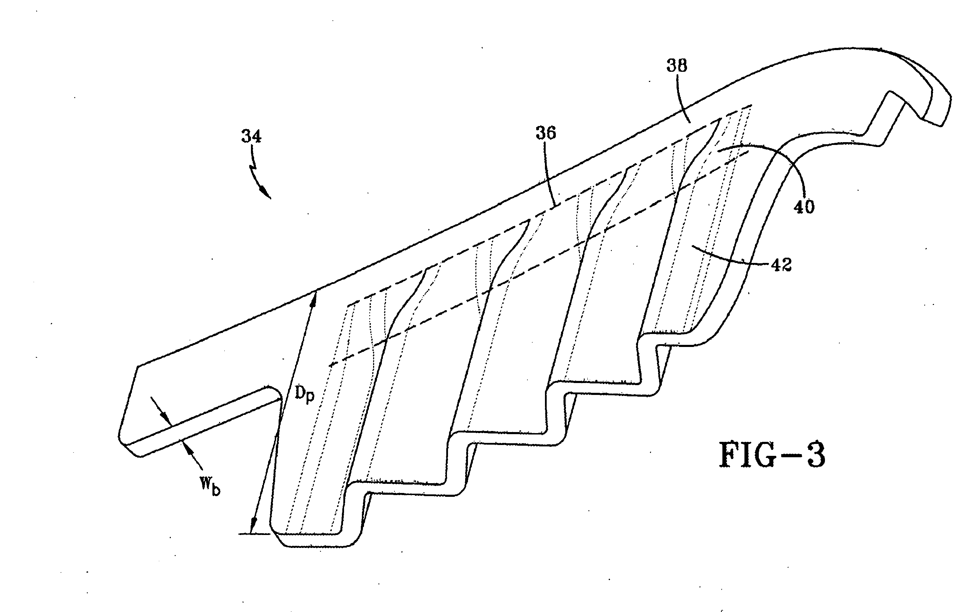

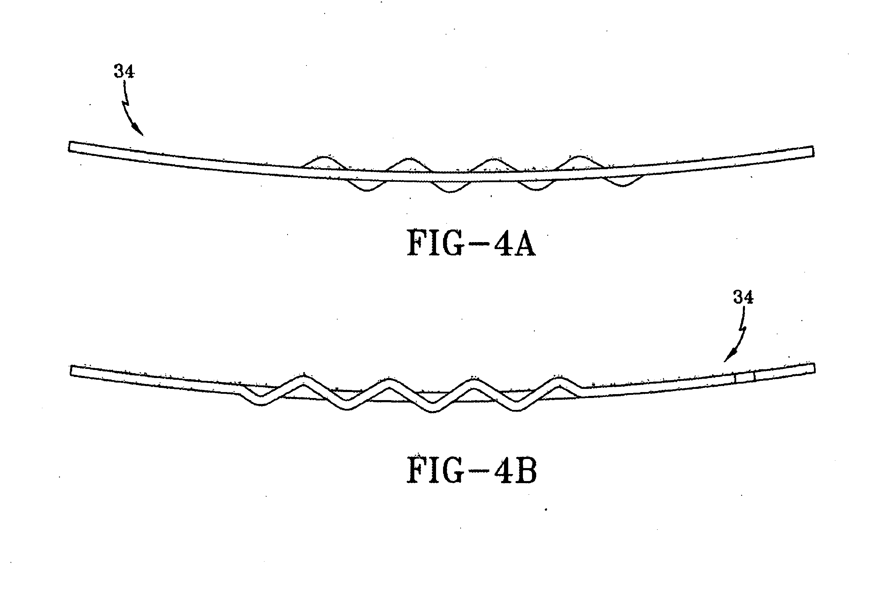

FIGS 3, 4A and 4B illustrate a blade 34 useful for manufacturing a sipe 26 of the type shown in FIG. 2. The blade 34 has a defined thickness Wb, and has a pattern portion 36 that creates the multi-dimensional sipe 26 in a tire tread. Those skilled in the art will appreciate that the full blade that would be employed/mounted in a specific tire mold for production is not being illustrated herein; instead, only a portion of the production blade is being illustrated. If this were a finished blade for mounting in a tire mold, additional blade material would be illustrated above the pattern portion for mounting the blade into a mold. The pattern portion 36 of the sipe blade 34 has a pattern depth Dp. The pattern portion 36 has an effective pattern length Lpe. The effective pattern length Lpe is calculated as the cross sectional area of the pattern portion 36 at any plane perpendicular to the pattern depth Dp divided by the blade thickness Wb, i.e. Lpe = cross sectional area / blade thickness Wb.

The pattern portion 36 of the blade 34 itself has three defined portions 38, 40, 42. The first pattern portion 38 has a constant configuration and a constant effective pattern length Lpe for a depth D1 of at least 5% but not greater than 20% of the uppermost portion of the pattern depth Dp. The configuration for the first pattern portion 38 is preferably straight or has a slight curvature thereto. The constant configuration may also mimic the configuration of a groove that will be formed adjacent to the formed sipe.

Directly adjacent to the first pattern portion 38 is a second pattern portion 40 best referred to as the transition zone. The second pattern portion 40 has a depth D2 of at least 5% but not greater than 25% of the pattern depth Dp. In the second pattern portion 40, the configuration transforms from one constant configuration, that of the first pattern portion 38, to a second constant configuration, that of the third pattern portion 42, wherein along the entire depth of the second pattern portion 40, the effective length Lpe of the pattern is gradually increasing.

Inward and directly adjacent to the second pattern portion 40 is the third and innermost pattern portion 42. The third pattern portion 42 has a depth D3 of at least 60% of the pattern depth, preferably, at least 75% of the pattern depth, but not more than 85% of the pattern depth. In the third pattern portion 42, the pattern configuration is constant, with the effective length Lpe of the pattern portion 42 being constant, and the effective length Lpe being greater than the effective length Lpe of the first pattern portion 38. The effective length Lpe of the third pattern portion 42 is at least 110% greater than the effective length Lpe of the first pattern portion 38, and more preferably 120% greater than the effective length Lpe of the first pattern portion 38. The third pattern portion 42 has a zig-zag, crenellated, scalloped, or undulating configuration; FIG. 3 illustrates a zig-zag configuration for the third pattern portion 42.

FIG. 4A is a top view of the blade 34 of FIG. 3. As seen, the blade 34 has a slight curvature along the length of the blade. This curve extends along the length and depth of the blade 34 and creates a dominant pattern for the sipe blade and the sipe created therefrom. FIG. 4B is a bottom view of the same blade 34; again showing the dominant pattern of the curve that extends the depth of the blade 34. While this blade 34 is illustrated with a curve, as noted previously, the blade, and the sipe formed therefrom, may also have a straight configuration or one that mimics an adjacent groove being formed in the tire tread.

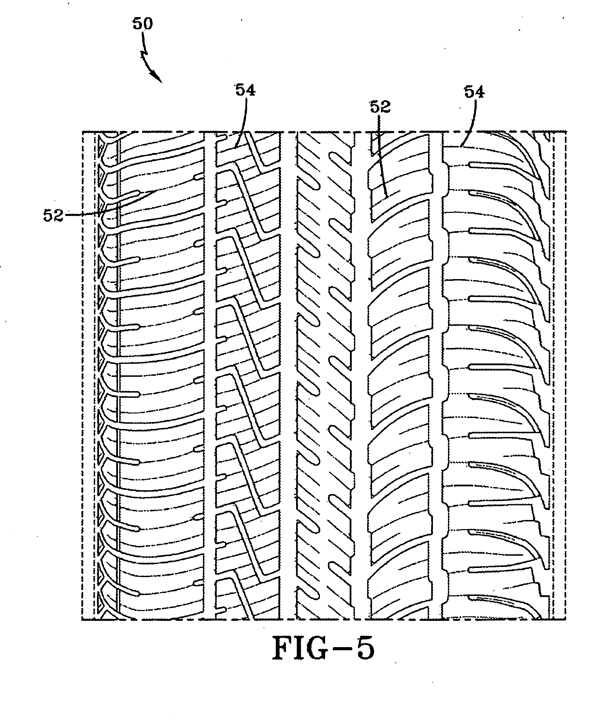

As seen in the tread of FIG. 1, at the tread surface, all of the sipes 22 have a surface configuration that mimics the adjacent lateral grooves 14, 16, though not all of the illustrated sipes 22 may have a varying configuration in accordance with the invention. The selection of which sipes 22 are provided with a varying pattern along its depth is determined by numerous factors, including but not limited to, desired characteristics of the tire, ease of manufacturing the blade to make the sipe, and ease of manufacturing the tire using such a blade. An alternative tread configuration is illustrated in FIG. 5. In this tread 50, the surface configuration of a majority of the sipes 52 mimics an adjacent groove configuration and the non-mimicking sipes 54 have a straight or slightly curved configuration. For both the treads 10, 50 illustrated, the tire designer might select to form only sipes in the axially outermost tread element rows or the element row located on the equatorial plane of the tire with the disclosed dimensional sipe configuration.

Sipes in accordance with the present invention provide for varying stiffness of the tread elements in which the sipes are formed during the tire tread life. Also, the increased effective length of the sipe as the sipe wears provides for more biting edges in the tire tread.

## Claims

1. A tire having a tire tread (10), the tire tread comprising a plurality of grooves (12, 14, 16), the grooves forming at least one tread element, the tread element having therein at least one sipe (22), the sipe having a width (W), a sipe depth (Ds), and an effective sipe length (Le), the effective sipe length (Le) being calculated as the cross sectional area of the sipe (22) at any plane perpendicular to the sipe depth (Ds) divided by the sipe width (W), wherein the sipe (22) has three sipe portions (28, 30, 32), the three sipe portions consisting of a first radially outermost portion (28) adjacent an outer surface (24) of the tire tread (10), a second transitional portion (30), and a third radially innermost third portion (32) adjacent a radially innermost point of the sipe (22), **characterized in that** the first radially outermost sipe portion (28) has a constant effective sipe length (Le) along the entire depth of the first sipe portion (28), the second transitional sipe portion (30) has a gradually increasing effective sipe length (Le) along the entire depth of the second sipe portion (30), and the third radially innermost sipe portion (32) has a constant effective sipe length (Le) along the entire depth of the third radially innermost sipe portion (28).

2. The tire of claim 1 wherein the first sipe portion (28) has a depth (D1) of at least 5% of the sipe depth (Ds) and/or wherein the first sipe portion (28) has a depth (D1) of not more than 20% of the sipe depth (Ds).

3. The tire of claim 1 or 2 wherein the second sipe portion (30) has a depth (D2) of at least 5% of the sipe depth (Ds) and/or wherein the second sipe portion (30) has a depth (D2) of not more than 25% of the sipe depth (Ds).

4. The tire of at least one of the previous claims wherein the third sipe portion (32) has a depth (D3) of at least 60% of the sipe depth (Ds) and/or wherein the third sipe portion (32) has a depth (D3) of not more than 85% of the sipe depth (Ds).

5. The tire of at least one of the previous claims wherein the third sipe portion (32) has an effective sipe length (Le) of at least 110% greater than the effective sipe length (Le) of the first sipe portion (28).

6. The tire of at least one of the previous claims wherein the first sipe portion (28) has a configuration that is straight, curved, or mimics a configuration of a groove that forms the tread element in which the sipe (26) is formed.

7. The tire of at least one of the previous claims wherein the sipe (26) has only three radially adjacent sipe portions (28, 30, 32) along the full depth (Ds) of the sipe (26).

8. The tire of at least one of the previous claims wherein the sipe (26) has only the one transition portion (30) wherein the effective length (Le) of the sipe (26) is gradually increasing.

9. The tire of at least one of the previous claims wherein the third sipe portion (32) has a zig-zag, crenellated, scalloped, or undulating configuration.

10. The tire of claim 1 wherein the effective sipe length (Le) of the third radially innermost sipe portion (32) is greater than the effective sipe length (Le) of the first radially outermost sipe portion (28).

11. The tire of claim 1 wherein the three sipe portions (28, 30, 32) are radially adjacent to each other in the order recited.

12. The tire of claim 1 or 11 wherein the three sipe portions (28, 30, 32) are the only portions of differing configurations along the full depth of the sipe (22).

13. A sipe blade (34) for forming a sipe (26) in a tire tread (10), the blade (34) having a thickness (Wb) and comprising a pattern portion (36), the pattern portion having a configuration to form a sipe (26) having a corresponding configuration, the pattern portion (36) of the blade (34) having a pattern depth (Dp), and an effective pattern length (Lpe), the effective pattern length being calculated as the cross sectional area of the pattern portion (36) at any plane perpendicular to the pattern depth (Dp) divided by the blade thickness (Wb), wherein the pattern portion (36) of the blade (34) has three pattern portions (38, 40, 42), the three pattern portions consisting of a first uppermost pattern portion (38) determining the radially outermost portion (28) of the sipe (22), a second transitional pattern portion (40), and a third lowermost pattern portion (42) determining the radially innermost portion (32) of the sipe (22), **characterized in that** the first pattern portion (38) has a constant effective pattern length (Lpe) along the entire depth of the first uppermost pattern portion (38), the second transitional pattern portion (40) has a gradually increasing effective pattern length (Lpe) along the entire depth of the second transitional pattern portion (40), and the third lowermost pattern portion (42) has a constant effective pattern length (Lpe) along the entire depth of the third lowermost pattern portion (42).

14. The sipe blade of claim 13 wherein the effective pattern length (Lpe) of the third lowermost pattern portion (42) is greater than the effective pattern length (Lpe) of the first uppermost pattern portion (38).

15. The sipe blade of claim 13 wherein the three pattern portions are radially adjacent to each other in the order recited and/or are the only portions of differing configurations along the full depth of the sipe (22).

## Patentansprüche

1. Reifen mit einer Reifenlauffläche (10), wobei die Reifenlauffläche eine Vielzahl von Rillen (12, 14, 16) umfasst, wobei die Rillen mindestens ein Profilelement bilden, wobei das Profilelement darin mindestens eine Lamelle (22) aufweist, wobei die Lamelle eine Breite (W), eine Lamellentiefe (Ds) und eine effektive Lamellenlänge (Le) aufweist, wobei die effektive Lamellenlänge (Le) berechnet wird als die Querschnittsfläche der Lamelle (22) an jeder Ebene senkrecht zu der Lamellentiefe (Ds), dividiert durch die Lamellentiefe (W), wobei die Lamelle (22) drei Lamellenteile (28, 30, 32) aufweist, wobei die drei Lamellenteile aus einem ersten, radial äußersten Teil (28) benachbart zu einer Außenfläche (24) der Reifenlauffläche, einem zweiten Übergangsteil (30) und einem dritten, radial innersten dritten Teil (32) benachbart zu einem radial innersten Punkt der Lamelle (22) bestehen,
**dadurch gekennzeichnet, dass** der erste, radial äußerste Lamellenteil (28) eine konstante effektive Lamellenlänge (Le) über die gesamte Tiefe des ersten Lamellenteils (28) aufweist, der zweite Übergangslamellenteil (30) eine allmählich zunehmende effektive Lamellenlänge (Le) über die gesamte Tiefe des zweiten Lamellenteils (30) aufweist und der dritte, radial innerste Lamellenteil (32) eine konstante effektive Lamellenlänge (Le) über die gesamte Tiefe des dritten, radial innersten Lamellenteils (28) aufweist.

2. Reifen nach Anspruch 1, wobei der erste Lamellenteil (28) eine Tiefe (D1) von mindestens 5% der Lamellentiefe (Ds) aufweist und/oder wobei der erste Lamellenteil (28) eine Tiefe (D1) von nicht mehr als 20% der Lamellentiefe (Ds) aufweist.

3. Reifen nach Anspruch 1 oder 2, wobei der zweite Lamellenteil (30) eine Tiefe (D2) von mindestens 5% der Lamellentiefe (Ds) aufweist und/oder wobei der zweite Lamellenteil (30) eine Tiefe (D2) von nicht mehr als 25% der Lamellentiefe (Ds) aufweist.

4. Reifen nach mindestens einem der vorgenannten Ansprüche, wobei der dritte Lamellenteil (32) eine Tiefe (D3) von mindestens 60% der Lamellentiefe (Ds) aufweist und/oder wobei der dritte Lamellenteil (32) eine Tiefe (D3) von nicht mehr als 85% der Lamellentiefe (Ds) aufweist.

5. Reifen nach mindestens einem der vorgenannten Ansprüche, wobei der dritte Lamellenteil (32) eine effektive Lamellenlänge (Le) von mindestens 110% größer als die effektive Lamellenlänge (L3) des ersten Lamellenteils (28) aufweist.

6. Reifen nach mindestens einem der vorgenannten Ansprüche, wobei der erste Lamellenteil (28) eine Konfiguration aufweist, die gerade ist, gekrümmt ist oder eine Konfiguration einer Rille nachahmt, die das Profilelement bildet, worin die Lamelle (26) ausgebildet ist.

7. Reifen nach mindestens einem der vorgenannten Ansprüche, wobei die Lamelle (26) nur drei radial benachbarte Lamellenteile (28, 30, 32) über die vollständige Tiefe (Ds) der Lamelle (26) aufweist.

8. Reifen nach mindestens einem der vorgenannten Ansprüche, wobei die Lamelle (26) nur den einen Übergangsteil (30) aufweist, wobei die effektive Länge (Le) der Lamelle (26) allmählich zunimmt.

9. Reifen nach mindestens einem der vorgenannten Ansprüche, wobei der dritte Lamellenteil (32) eine Zickzack-, mit Zinnen versehene, gezahnte oder wellenförmige Konfiguration aufweist.

10. Reifen nach Anspruch 1, wobei die effektive Lamellenlänge (Le) des dritten radial innersten Lamellenteils (32) größer als die effektive Lamellenlänge (Le) des ersten radial äußersten Lamellenteils (28) ist.

11. Reifen nach Anspruch 1, wobei die drei Lamellenteile (28, 30, 32) einander in der aufgeführten Abfolge radial benachbart sind.

12. Reifen nach Anspruch 1 oder 11, wobei die drei Lamellenteile (28, 30, 32) die einzigen Teile mit unterschiedlicher Konfiguration über die gesamte Tiefe der Lamelle (22) sind.

13. Lamellenblech (34) zum Formen einer Lamelle (26) in einer Reifenlauffläche (10), wobei das Blech (34) eine Dicke (Wb) aufweist und einen Musterteil (36) aufweist, wobei der Musterteil eine Konfiguration hat, um eine Lamelle (26) mit einer entsprechenden Konfiguration zu formen, wobei der Musterteil (36) des Blechs (34) eine Mustertiefe (Dp) und eine effektive Musterlänge (Lpe) aufweist, wobei die effektive Musterlänge als die Querschnittsfläche des Musterteils (36) an jeder Ebene senkrecht zu der Mustertiefe (Dp), dividiert durch die Blechdicke (Wb), berechnet wird, wobei der Musterteil (36) des Blechs (34) drei Musterteile (38, 40, 42) aufweist, wobei die drei Musterteile aus einem ersten, obersten Musterteil (38), der den radial äußersten Teil (28) der Lamelle (22) bestimmt, einem zweiten Übergangsmusterteil (40) und einem dritten, untersten Musterteil (42), der den radial innersten Teil (32) der Lamelle (22) bestimmt, bestehen,
**dadurch gekennzeichnet, dass** der erste Musterteil (38) eine konstant effektive Musterlänge (Lpe) über die gesamte Tiefe des ersten, obersten Musterteils (38) aufweist, der zweite Übergangsmusterteil (40) eine allmählich zunehmende effektive Musterlänge (Lpe) über die gesamte Tiefe des zweiten Übergangsmusterteils (40) aufweist und der dritte, unterste Musterteil (42) eine konstante effektive Musterlänge (Lpe) über die gesamte Tiefe des dritten, untersten Musterteils (42) aufweist.

14. Lamellenblech nach Anspruch 13, wobei die effektive Musterlänge (Lpe) des dritten, untersten Musterteils (42) größer als die effektive Musterlänge (Lpe) des ersten, obersten Musterteils (38) ist.

15. Lamellenblech nach Anspruch 13, wobei die drei Musterteile einander in der aufgeführten Abfolge radial benachbart sind und/oder die einzigen Teile mit unterschiedlichen Konfigurationen über die gesamte Tiefe der Lamelle (22) sind.

## Revendications

1. Bandage pneumatique possédant une bande de roulement de bandage pneumatique (10), la bande de roulement du bandage pneumatique comprenant plusieurs rainures (12, 14, 16), les rainures formant au moins un élément de bande de roulement, l'élément de bande de roulement comportant au moins une lamelle (22), la lamelle possédant une largeur (W), une profondeur de lamelle (Ds), et une longueur de lamelle effective (Le), la longueur de lamelle effective (le) correspondant au calcul de l'aire de section transversale de la lamelle (22) à n'importe quel plan perpendiculaire à la profondeur de la lamelle (Ds) divisé par la largeur de la lamelle (W), la lamelle (22) possédant trois portions de lamelle (28, 30, 32), les trois portions de lamelle étant constituées par une première portion (28) le plus à l'extérieur en direction radiale, adjacente à une surface externe (24) de la bande de roulement (10) du bandage pneumatique, une deuxième portion de transition (30), et une troisième portion (32) le plus à l'intérieur en direction radiale, adjacente au point le plus interne de la lamelle (22) en direction radiale, **caractérisé en ce que** la première portion de lamelle (28) le plus à l'extérieur en direction radiale possède une longueur de lamelle effective constante (Le) sur toute la profondeur de la première portion de lamelle (28), la deuxième portion de lamelle de transition (30) possède une longueur de lamelle effective (Le) qui augmente progressivement sur toute la profondeur de la deuxième portion de lamelle (30), et la troisième portion de lamelle (32) le plus à l'intérieur en direction radiale possède une longueur de lamelle effective constante (Le) sur toute la profondeur de la troisième portion de lamelle (32) le plus à l'intérieur en direction radiale.

2. Bandage pneumatique selon la revendication 1, dans lequel la première portion de lamelle (28) possède une profondeur (D1) qui représente au moins 5 % de la profondeur de lamelle (Ds) et/ou dans lequel la première portion de lamelle (28) possède une profondeur (D1) qui ne représente pas plus de 20 % de la profondeur de lamelle (Ds).

3. Bandage pneumatique selon la revendication 1 ou 2, dans lequel la deuxième portion de lamelle (30) possède une profondeur (D2) qui représente au moins 5 % de la profondeur de lamelle (Ds) et/ou dans lequel la deuxième portion de lamelle (30) possède une profondeur (D2) qui ne représente pas plus de 25 % de la profondeur de lamelle (Ds).

4. Bandage pneumatique selon l'une quelconque des revendications précédentes, dans lequel la troisième portion de lamelle (32) possède une profondeur (D3) qui représente au moins 60 % de la profondeur de lamelle (Ds) et/ou dans lequel la troisième portion de lamelle (32) possède une profondeur (D3) qui ne représente pas plus de 85 % de la profondeur de lamelle (Ds).

5. Bandage pneumatique selon l'une quelconque des revendications précédentes, dans lequel la troisième portion de lamelle (32) possède une longueur de lamelle effective (Le) supérieure à concurrence d'au moins 110 % à la longueur de lamelle effective (Le) de la première portion de lamelle (28).

6. Bandage pneumatique selon l'une quelconque des revendications précédentes, dans lequel la première portion de lamelle (28) possède une configuration qui est droite, courbe, ou qui imite une configuration d'une rainure qui forme l'élément de bande de roulement dans lequel est formée la lamelle (26).

7. Bandage pneumatique selon l'une quelconque des revendications précédentes, dans lequel la lamelle (26) possède seulement trois portions de lamelle (28, 30, 32) adjacentes en direction radiale sur toute la profondeur (Ds) de la lamelle (26).

8. Bandage pneumatique selon l'une quelconque des revendications précédentes, dans lequel la lamelle (26) possède uniquement la seule portion de transition (30) dans laquelle la longueur effective (Le) de la lamelle (26) augmente de manière progressive.

9. Bandage pneumatique selon l'une quelconque des revendications précédentes, dans lequel la troisième portion de lamelle (32) possède une configuration en zigzag, crénelée, en corne ou ondulée.

10. Bandage pneumatique selon la revendication 1, dans lequel la longueur de lamelle effective (Le) de la troisième portion de lamelle (32) le plus à l'intérieur en direction radiale est supérieure à la longueur de lamelle effective (Le) de la première portion de lamelle (28) le plus à l'extérieur en direction radiale.

11. Bandage pneumatique selon la revendication 1, dans lequel les trois portions de lamelle (28, 30, 32) sont adjacentes les unes aux autres, en direction radiale, dans l'ordre indiqué.

12. Bandage pneumatique selon la revendication 1 ou 11, dans lequel les trois portions de lamelle (28, 30, 32) sont les seules portions possédant des configurations différentes sur toute la profondeur de la lamelle (22).

13. Lame pour lamelle (34) pour former une lamelle (26) dans une bande de roulement de bandage pneumatique (10), la lame (34) possédant une épaisseur (Wb) et comprenant une portion de sculpture (36), la portion de sculpture possédant une configuration pour former une lamelle (26) possédant une configuration correspondante, la portion de sculpture (36) de la lame (34) possédant une profondeur de sculpture (Dp) et une longueur de sculpture effective (Lpe), la longueur de sculpture effective correspondant au calcul de l'aire de section transversale de la portion de sculpture (36) à n'importe quel plan perpendiculaire à la profondeur de sculpture (Dp) divisé par l'épaisseur de la lame (Wb), la portion de sculpture (36) de la lame (34) possédant trois portions de sculpture (38, 40, 42), les trois portions de sculpture étant constituées par une première portion de sculpture (38) la plus haute, déterminant la portion gratuite de la lamelle (22) le plus à l'extérieur en direction radiale adjacente, une deuxième portion de sculpture de transition (40), et une troisième portion de sculpture (42) la plus basse, déterminant la portion (32) de la lamelle (22) le plus à l'intérieur en direction radiale, **caractérisée en ce que** la première portion de sculpture (38) possède une longueur de sculpture effective constante (Lpe) sur toute la profondeur de la première portion de sculpture la plus haute (38), la deuxième portion de sculpture de transition (40) possède une longueur de sculpture effective (Le) qui augmente progressivement sur toute la profondeur de la deuxième portion de transition de sculpture (40), et la troisième portion de sculpture la plus basse (42) possède une longueur de lamelle effective constante (Lpe) sur toute la profondeur de la troisième portion de sculpture la plus basse (42).

14. Lame pour lamelle selon la revendication 13, dans laquelle la longueur de sculpture effective (Lpe) de la troisième portion de sculpture la plus basse (42) est supérieure à la longueur de sculpture effective (Lpe) de la première portion de sculpture la plus haute (38).

15. Lame pour lamelle selon la revendication 13, dans laquelle les trois portions de sculpture sont adjacentes les unes aux autres en direction radiale dans l'ordre indiqué et/ou représentent les seules portions possédant des configurations différentes sur toute la profondeur de la lamelle (22).
